# EUROPEAN PATENT APPLICATION

(11) **EP 4 768 302 A1**
(43) Date of publication of application: **01.07.2026**
(21) Application number: 25207047.9
(22) Date of filing: 06.10.2025
(51) Int. Cl.: B60L 3/00, B60L 3/04, B60L 15/12, B60L 50/11, B60L 53/22, B60L 58/19

(54) **VEHICLE CONNECTION CIRCUIT AND VEHICLE BATTERY STRUCTURE**

(30) Priority: 26.12.2024 JP 2024231123
(71) Applicant: TOYOTA JIDOSHA KABUSHIKI KAISHA, Toyota-shi, Aichi-ken 471-8571 (JP)
(72) Inventor: SHIMIZU, Yuki, TOYOTA-SHI, AICHI-KEN, 471-8571 (JP); TANEBAYASHI, Yosuke, TOYOTA-SHI, AICHI-KEN, 471-8571 (JP)
(74) Representative: Cabinet Beau de Loménie

(57) **Abstract**

A junction block is provided to a vehicle and is interposed between a motor and each of a first battery and a second battery connectable to each other to electrically connect the first battery, the second battery, and the motor. The junction block includes a first path that charges only the first battery and is provided with a first current sensor, a second path that charges only the second battery, a third path that charges the first battery and the second battery, and a second current sensor that is provided at a portion where the second path and the third path overlap each other and do not overlap the first path, and measures a current flowing through the second battery.

## Description

### BACKGROUND OF THE INVENTION

### 1. Field of the Invention

The present disclosure relates to a vehicle connection circuit and a vehicle battery structure.

### 2. Description of Related Art

Japanese Unexamined Patent Application Publication No. 2024-120972 (JP 2024-120972 A) describes a battery pack having a simple structure that can suppress an electrical short circuit between a cathode-side device and an anode-side device when an impact load acts on the battery pack.

### SUMMARY OF THE INVENTION

A vehicle including a plurality of batteries may be provided with a vehicle connection circuit (hereinafter also referred to as "junction block") connectable to the batteries. In this junction block, a current sensor may be disposed to detect malfunction of a relay. In this case, it is desirable to dispose the minimum necessary number of current sensors from the viewpoint of reducing costs and simplifying the structure. Depending on the location of the current sensors, however, it may be impossible to detect malfunction of the relay.

An object of the present disclosure is to provide a vehicle connection circuit and a vehicle battery structure in which the minimum necessary number of current sensors can detect malfunction of a relay in a vehicle including a plurality of batteries.

A vehicle connection circuit according to claim 1 is a vehicle connection circuit that is provided to a vehicle and is interposed between a motor and each of a first battery and a second battery connectable to each other to electrically connect the first battery, the second battery, and the motor. The vehicle connection circuit includes: a first path configured to charge only the first battery; a second path configured to charge only the second battery; a third path configured to charge the first battery and the second battery; and a current sensor that is provided at a portion where the second path and the third path overlap each other and do not overlap the first path, and is configured to measure a current flowing through the second battery.

In the vehicle connection circuit according to claim 1, the minimum necessary number of current sensors can detect malfunction of a relay in the vehicle including a plurality of batteries. The term "minimum necessary" herein means that the number of current sensors is minimum necessary. For example, when two batteries are connected in parallel and when they are connected in series, at least one current sensor can detect the malfunction of the relay. Thus, the costs can be reduced and the structure can be simplified.

In a vehicle connection circuit according to claim 2, in the vehicle connection circuit according to claim 1, the current sensor is disposed between a junction of the second path and the third path and a positive side of the second battery, or between a negative side of the second battery and a junction of the first path and the second path.

In the vehicle connection circuit according to claim 2, when two batteries are connected in parallel and when they are connected in series, at least one current sensor can detect the malfunction of the relay.

In the vehicle connection circuit according to claim 1, a vehicle connection circuit according to claim 3 further includes another current sensor that is provided at a portion where the first path and the third path overlap each other and do not overlap the second path, and is configured to measure a current flowing through the first battery.

In the vehicle connection circuit according to claim 3, the malfunction of the relay can be detected with higher accuracy by comparing the currents measured by the two current sensors.

In a vehicle connection circuit according to claim 4, in the vehicle connection circuit according to claim 1, a relay is provided in the first path at a position where the first path does not overlap the second path and the third path, another relay is provided in the third path at a position where the third path does not overlap the first path and the second path, and the current sensor is configured to measure a short-circuit current caused by malfunction of the other relay when the first battery and the second battery are connected in parallel, and measure a short-circuit current caused by malfunction of the relay when the first battery and the second battery are connected in series.

In the vehicle connection circuit according to claim 4, the short-circuit current caused by the malfunction of the relay can be measured.

A vehicle battery structure according to claim 5 includes: a first battery; a second battery connectable to the first battery; and the vehicle connection circuit according to any one of claims 1 to 4 that is interposed between a motor and each of the first battery and the second battery to electrically connect the first battery, the second battery, and the motor.

In the vehicle battery structure according to claim 5, the minimum necessary number of current sensors can detect malfunction of the relay in the vehicle including a plurality of batteries.

As described above, according to the present disclosure, the minimum necessary number of current sensors can detect malfunction of the relay in the vehicle including a plurality of batteries.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a block diagram showing an example of the configuration of a vehicle battery structure mounted on a vehicle according to an embodiment;
FIG. 2 is a diagram showing an example of the circuit configuration of the vehicle battery structure according to the embodiment;
FIG. 3 is a diagram showing an example of the circuit configuration of the vehicle battery structure according to the embodiment;
FIG. 4 is a diagram showing an example of the circuit configuration of the vehicle battery structure according to the embodiment; and
FIG. 5 is a diagram showing the circuit configuration of a vehicle battery structure according to a modification.

### DETAILED DESCRIPTION OF EMBODIMENTS

Hereinafter, an exemplary embodiment of the technology of the present disclosure will be described in detail with reference to the drawings.

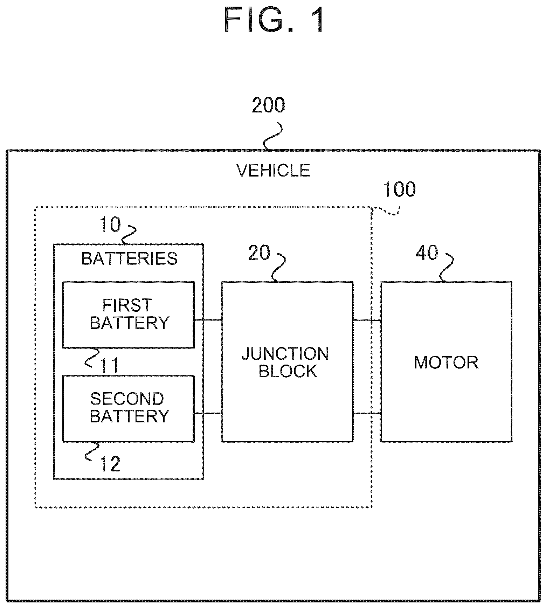

FIG. 1 is a block diagram showing an example of the configuration of a vehicle battery structure 100 mounted on a vehicle 200 according to the present embodiment. As shown in FIG. 1, the vehicle 200 according to the present embodiment includes the vehicle battery structure 100 and a motor 40 that drives the vehicle 200. The vehicle battery structure 100 includes batteries 10 and a junction block 20. The batteries 10 include a first battery 11 and a second battery 12. The first battery 11 and the second battery 12 are connectable to each other. The junction block 20 is an example of a vehicle connection circuit, and is interposed between each of the first battery 11 and the second battery 12 and the motor 40 to electrically connect the first battery 11, the second battery 12, and the motor 40.

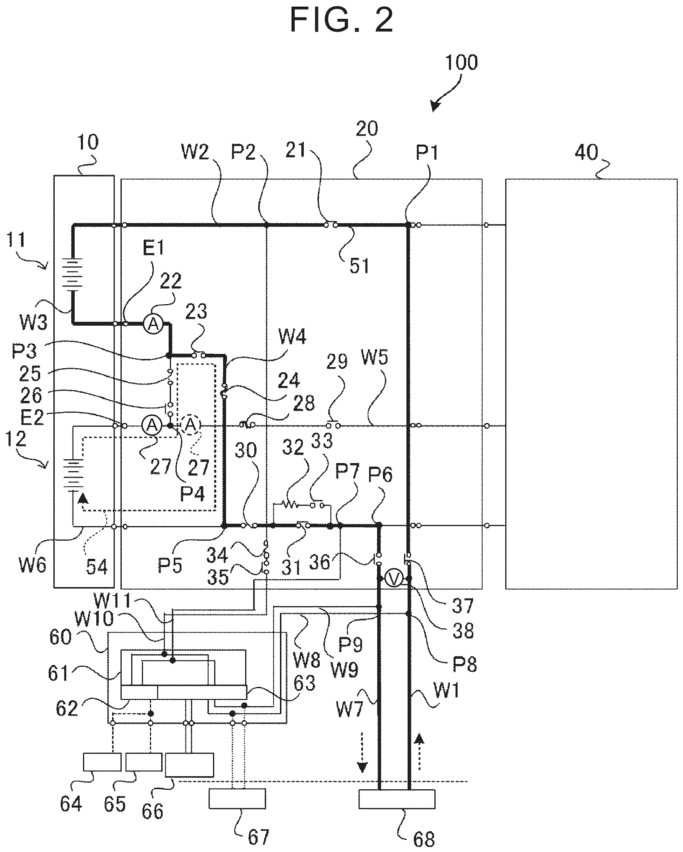

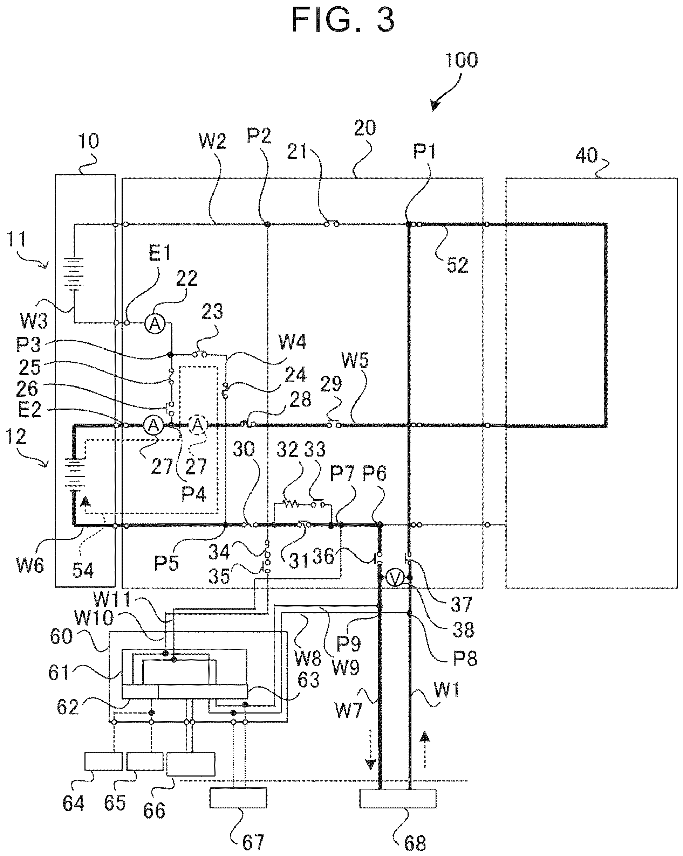

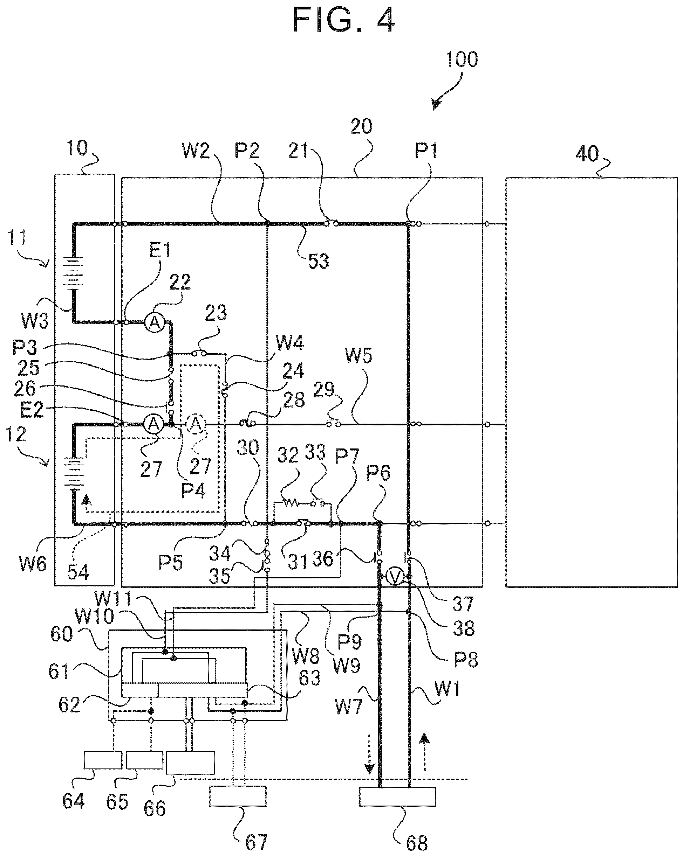

FIGS. 2 to 4 are diagrams showing examples of the circuit configuration of the vehicle battery structure 100 according to the present embodiment. The circuit configurations in FIGS. 2 to 4 are similar to each other. FIG. 2 shows a first path 51 (wide line). FIG. 3 shows a second path 52 (wide line). FIG. 4 shows a third path 53 (wide line). The dotted arrows in FIGS. 2 to 4 indicate the current flow direction.

As shown in FIGS. 2 to 4, when quick charging is performed using a DC inlet 68, the junction block 20 is connected to the DC inlet 68 for quick charging of the first battery 11 and the second battery 12. When normal charging is performed using a 2-in-1 charger 60, the junction block 20 is connected to a solar panel 64 and an auxiliary battery 65 for normal charging of the first battery 11 and the second battery 12 via the 2-in-1 charger 60. The junction block 20 may be connected to a wiring plug connector (so-called AC 100 V outlet) 66 or an AC inlet 67 for charging of the first battery 11 and the second battery 12 via the 2-in-1 charger 60. The 2-in-1 charger 60 includes a filter 61, a DC-DC converter 62, and an on-board battery charger (OBC) 63. The DC-DC converter 62 is connected to the solar panel 64 and the auxiliary battery 65, and converts a DC voltage supplied from the solar panel 64 and the auxiliary battery 65 into a predetermined DC voltage according to the first battery 11 and the second battery 12. The OBC 63 is connected to the wiring plug connector 66 or the AC inlet 67, and converts an AC voltage supplied from the wiring plug connector 66 or the AC inlet 67 into a predetermined DC voltage according to the first battery 11 and the second battery 12. The DC-DC converter 62 and the OBC 63 are connected to the junction block 20.

The junction block 20 includes a positive-side system main relay 21, a first current sensor 22, a first DC relay 23, a first fuse 24, a DC fuse 25, a second DC relay 26, a second current sensor 27, a second fuse 28, a third DC relay 29, a third fuse 30, a negative-side system main relay 31, a limiting resistor 32, a precharge-side system main relay 33, an AC fuse 34, a positive-side system sub-relay 35, a fourth DC relay 36, a fifth DC relay 37, and a voltage sensor 38.

One end of a wire W1 is connected to the positive side of the DC inlet 68, and the other end is connected to a wire W2 at a contact point P1. One end of the wire W2 is connected to the motor 40, and the other end is connected to the positive side of the first battery 11. One end of a wire W3 is connected to the negative side of the first battery 11, and the other end is connected to a wire W5 at a contact point P4. One end of a wire W4 is connected to the wire W3 at a contact point P3, and the other end is connected to a wire W6 at a contact point P5. One end of the wire W5 is connected to the motor 40, and the other end is connected to the positive side of the second battery 12. One end of the wire W6 is connected to the negative side of the second battery 12, and the other end is connected to the motor 40. One end of a wire W7 is connected to the negative side of the DC inlet 68, and the other end is connected to the wire W6 at a contact point P6. One end of a wire W8 is connected to the positive side of the OBC 63, and the other end is connected to the wire W1 at a contact point P8. One end of a wire W9 is connected to the negative side of the OBC 63, and the other end is connected to the wire W7 at a contact point P9. One end of a wire W10 is connected to the positive side of the DC-DC converter 62 and the positive side of the OBC 63, and the other end is connected to the wire W2 at a contact point P2. One end of a wire W11 is connected to the negative side of the DC-DC converter 62 and the negative side of the OBC 63, and the other end is connected to the wire W6 at a contact point P7.

The junction block 20 according to the present embodiment includes the first path 51 (shown by the wide line in FIG. 2), the second path 52 (shown by the wide line in FIG. 3), and the third path 53 (shown by the wide line in FIG. 4). The first path 51 is a path that charges only the first battery 11 using the DC inlet 68 and passes through the wires W1, W2, W3, W4, W6, W7. The second path 52 is a path that charges only the second battery 12 using the DC inlet 68 and passes through the wires W1, W2, the motor 40, and the wires W5, W6, W7. The third path 53 is a path that charges the first battery 11 and the second battery 12 using the DC inlet 68 and passes through the wires W1, W2, W3, W5, W6, W7.

The positive-side system main relay 21 is disposed between the contact point P1 of the wire W1 and the contact point P2 of the wire W2, and switches the first path 51 and the second path 52. The first current sensor 22 is disposed between the negative side of the first battery 11 on the wire W3 and the contact point P3, and measures a current flowing through the first path 51 or the third path 53. The first DC relay 23 is disposed between the contact point P3 of the wire W3 and the first fuse 24 on the wire W4, and switches the first path 51 and the third path 53. The first fuse 24 is disposed between the first DC relay 23 and the contact point P5 of the wire W4. The DC fuse 25 is disposed between the contact point P3 of the wire W3 and the second DC relay 26. The second DC relay 26 is disposed between the DC fuse 25 on the wire W3 and the contact point P4, and switches the first path 51 and the third path 53. The second current sensor 27 is disposed between the contact point P4 of the wire W5 and the positive side of the second battery 12, and measures a current flowing through the second path 52 or the third path 53. The second fuse 28 is disposed between the contact point P4 of the wire W5 and the third DC relay 29. The third DC relay 29 is disposed between the second fuse 28 on the wire W5 and the motor 40, and switches the first path 51 and the second path 52. The third fuse 30 is disposed between the contact point P5 of the wire W6 and the negative-side system main relay 31. The negative-side system main relay 31 is disposed between the third fuse 30 on the wire W6 and the contact point P7, and switches the first path 51, the second path 52, and the third path 53 ON and OFF. The limiting resistor 32 and the precharge-side system main relay 33 are connected in parallel to the negative-side system main relay 31 to form a precharge circuit. The AC fuse 34 is disposed between the positive-side system sub-relay 35 on the wire W10 and the contact point P2. The positive-side system sub-relay 35 is disposed between the AC fuse 34 on the wire W10 and the positive side of each of the DC-DC converter 62 and the OBC 63, and switches connection to and disconnection from the 2-in-1 charger 60. The fourth DC relay 36 is disposed between the contact point P9 and the contact point P6 of the wire W7, and switches connection to and disconnection from the DC inlet 68. The fifth DC relay 37 is disposed between the contact point P1 and the contact point P8 of the wire W1, and switches connection to and disconnection from the DC inlet 68. The voltage sensor 38 is disposed between the wire W1 and the wire W7, and measures a voltage between the wire W1 and the wire W7.

The second current sensor 27 according to the present embodiment is an example of a current sensor. As shown in FIGS. 2 and 3, the second current sensor 27 is provided at a portion where the second path 52 and the third path 53 overlap each other and do not overlap the first path 51, and measures a current flowing through the second battery 12. More specifically, the second current sensor 27 is disposed between the junction of the second path 52 and the third path 53 and the positive side of the second battery 12. The junction of the second path 52 and the third path 53 is the contact point P4. The portion where the second path 52 and the third path 53 overlap each other may be, for example, a portion between the contact point P4 and an end point E2 of the junction block 20. The end point E2 is connected to the positive side of the second battery 12. The first current sensor 22 is an example of another current sensor. The first current sensor 22 is provided at a portion where the first path 51 and the third path 53 overlap each other and do not overlap the second path 52, and measures a current flowing through the first battery 11. More specifically, the first current sensor 22 is disposed between the negative side of the first battery 11 and the branch point of the first path 51 and the third path 53. The branch point of the first path 51 and the third path 53 is the contact point P3. The portion where the first path 51 and the third path 53 overlap each other may be, for example, a portion between the contact point P3 and an end point E1 of the junction block 20. The end point E1 is connected to the negative side of the first battery 11. The first DC relay 23 is provided at a position where the first path 51 does not overlap the second path 52 and the third path 53. The second DC relay 26 is provided at a position where the third path 53 does not overlap the first path 51 and the second path 52. The first DC relay 23 is an example of a relay. The second DC relay 26 is an example of another relay. The second current sensor 27 measures a short-circuit current caused by malfunction of the second DC relay 26 when the first battery 11 and the second battery 12 are connected in parallel, and measures a short-circuit current caused by malfunction of the first DC relay 23 when the first battery 11 and the second battery 12 are connected in series.

It is assumed that the first battery 11 and the second battery 12 are connected in parallel. In this case, a current flows through the first path 51 shown in FIG. 2 and the second path 52 shown in FIG. 3, and the first battery 11 and the second battery 12 are charged in parallel. When the first battery 11 and the second battery 12 are being charged in parallel, the second DC relay 26 is OFF, and the current measured by the first current sensor 22 is substantially the same as the current measured by the second current sensor 27. If the second DC relay 26 is erroneously turned ON during the charging, a short-circuit current path 54 is formed as shown in FIGS. 2 and 3. The second current sensor 27 can measure the current in the short-circuit current path 54. That is, the short-circuit current path 54 is formed when the second DC relay 26 malfunctions. Therefore, the current measured by the first current sensor 22 differs from the current measured by the second current sensor 27. Thus, the malfunction of the second DC relay 26 can be detected. The malfunction of the second DC relay 26 can also be detected using only the second current sensor 27. In this case, a sudden current change due to the short-circuit current path 54 may be detected.

Next, it is assumed that the first battery 11 and the second battery 12 are connected in series. In this case, a current flows through the third path 53 shown in FIG. 4, and the first battery 11 and the second battery 12 are charged in series. When the first battery 11 and the second battery 12 are being charged in series, the first DC relay 23 is OFF, and the current measured by the first current sensor 22 is substantially the same as the current measured by the second current sensor 27. If the first DC relay 23 is erroneously turned ON during the charging, the short-circuit current path 54 is formed as shown in FIG. 4. The second current sensor 27 can measure the current in the short-circuit current path 54. That is, the short-circuit current path 54 is formed when the first DC relay 23 malfunctions. Therefore, the current measured by the first current sensor 22 differs from the current measured by the second current sensor 27. Thus, the malfunction of the first DC relay 23 can be detected. The malfunction of the first DC relay 23 can also be detected using only the second current sensor 27. In this case, a sudden current change due to the short-circuit current path 54 may be detected.

A state in which the second current sensor 27 is provisionally disposed on the second fuse 28 side of the contact point P4 is shown by a dotted line. When the second current sensor 27 is disposed as shown by the dotted line, the current in the short-circuit current path 54 cannot be measured. Thus, the malfunctions of the second DC relay 26 and the first DC relay 23 cannot be detected. Since the second current sensor 27 according to the present embodiment is disposed at the portion between the contact point P4 and the end point E2, the current in the short-circuit current path 54 can be measured. Thus, the malfunction of the relay can be detected irrespective of whether the first battery 11 and the second battery 12 are connected in parallel or in series.

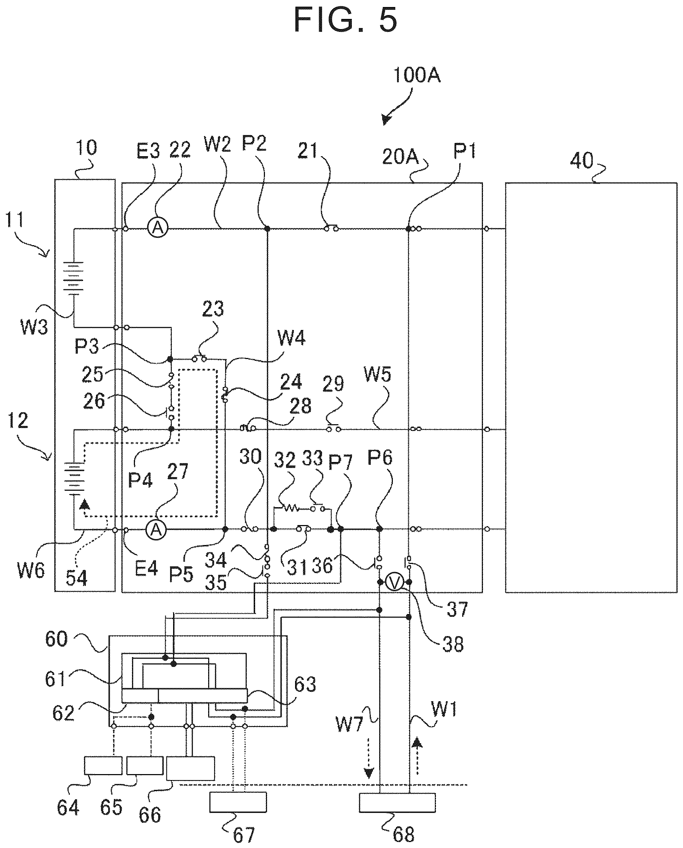

FIG. 5 is a diagram showing the circuit configuration of a vehicle battery structure 100A according to a modification. In FIG. 5, the first path 51, the second path 52, and the third path 53 are omitted from the illustration for clarity of the drawing. As shown in FIG. 5, the vehicle battery structure 100A according to the modification includes a junction block 20A. The junction block 20A and the junction block 20 (see FIGS. 2 to 4) differ from each other in terms of the positions where the first current sensor 22 and the second current sensor 27 are disposed. The second current sensor 27 is provided at a portion where the second path 52 and the third path 53 overlap each other and do not overlap the first path 51, and measures the current flowing through the second battery 12. More specifically, the second current sensor 27 is disposed between the negative side of the second battery 12 and the junction of the first path 51 and the second path 52. The junction of the first path 51 and the second path 52 is the contact point P5. The portion where the second path 52 and the third path 53 overlap each other may be, for example, a portion between the contact point P5 and an end point E4 of the junction block 20. The end point E4 is connected to the negative side of the second battery 12. The first current sensor 22 is provided at a portion where the first path 51 and the third path 53 overlap each other and do not overlap the second path 52, and measures the current flowing through the first battery 11. More specifically, the first current sensor 22 is disposed between the contact point P2 of the wire W2 and the positive side of the first battery 11. The portion where the first path 51 and the third path 53 overlap each other may be, for example, a portion between the contact point P2 and an end point E3 of the junction block 20. The end point E3 is connected to the positive side of the first battery 11.

When the second current sensor 27 is disposed on the third fuse 30 side of the contact point P5, the current in the short-circuit current path 54 cannot be measured. Thus, the malfunctions of the second DC relay 26 and the first DC relay 23 cannot be detected. Since the second current sensor 27 according to the modification is disposed at the portion between the contact point P5 and the end point E4, the current in the short-circuit current path 54 can be measured. Thus, the malfunction of the relay can be detected irrespective of whether the first battery 11 and the second battery 12 are connected in parallel or in series.

As described above, according to the present embodiment, the minimum necessary number of current sensors can detect malfunction of the relay in the vehicle including a plurality of batteries.

The technical scope of the present disclosure is not limited to the scope described in the above embodiment. Various modifications or improvements can be made to the above embodiment without departing from the scope of the present disclosure, and such modifications or improvements are also included in the technical scope of the present disclosure.

## Claims

1. A vehicle connection circuit configured to be provided to a vehicle (200) and interposed between a motor (40) and each of a first battery (11) and a second battery (12) connectable to each other to electrically connect the first battery (11), the second battery (12), and the motor (40), the vehicle connection circuit comprising:
a first path (51) configured to charge only the first battery (11);
a second path (52) configured to charge only the second battery (12);
a third path (53) configured to charge the first battery (11) and the second battery (12); and
a current sensor (27) that is provided at a portion where the second path (52) and the third path (53) overlap each other and do not overlap the first path (51), and is configured to measure a current flowing through the second battery (12).

2. The vehicle connection circuit according to claim 1, wherein the current sensor (27) is disposed between a junction (P4) of the second path (52) and the third path (53) and a positive side of the second battery (12), or between a negative side of the second battery (12) and a junction (P5) of the first path (51) and the second path (52).

3. The vehicle connection circuit according to any one of claims 1 or 2, further comprising another current sensor (22) that is provided at a portion where the first path (51) and the third path (53) overlap each other and do not overlap the second path (52), and is configured to measure a current flowing through the first battery (11).

4. The vehicle connection circuit according to any one of claims 1 to 3, wherein:
a relay (23) is provided in the first path (51) at a position where the first path (51) does not overlap the second path (52) and the third path (53);
another relay (26) is provided in the third path (53) at a position where the third path (53) does not overlap the first path (51) and the second path (52); and
the current sensor (27) provided at the portion where the second path (52) and the third path (53) overlap each other and do not overlap the first path (51) is configured to measure a short-circuit current caused by malfunction of the relay (26) provided in the third path (53) when the first battery (11) and the second battery (12) are connected in parallel, and measure a short-circuit current caused by malfunction of the relay (23) provided in the first path when the first battery (11) and the second battery (12) are connected in series.

5. A vehicle battery structure (100) comprising:
a first battery (11);
a second battery (12) connectable to the first battery (11); and
the vehicle connection circuit according to any one of claims 1 to 4 configured to be interposed between a motor (40) and each of the first battery (11) and the second battery (12) to electrically connect the first battery (11), the second battery (12), and the motor (40).
